# EUROPEAN PATENT SPECIFICATION

(11) **EP 2 596 707 B1**
(45) Date of publication and mention of the grant of the patent: **05.03.2014**
(21) Application number: 11425285.1
(22) Date of filing: 25.11.2011
(51) Int. Cl.: A23N 4/08, A23N 7/08, C11B 1/00

(54) **Method and apparatus for thermal conditioning of olives or other oleaginous fruits combined with a crushing and kneading system of olives or other oleaginous fruits in controlled or modified atmosphere**
Verfahren und Vorrichtung zur thermischen Konditionierung von Oliven oder anderen Ölfrüchten, kombiniert mit einem Zerkleinerungs- und Knetsystem für Oliven oder andere Ölfrüchte in kontrollierter oder modifizierter Atmosphäre
Procédé et dispositif pour le conditionnement thermique d'olives ou d'autres fruits oléagineux, en combinaison avec un système de broyage et de malaxage desdits olives et d'autres fruits oléagineux, sous une atmospère controlée ou modifiée

(43) Date of publication of application: 29.05.2013
(73) Proprietor: Universita' Degli Studi di Bari, 70121 Bari (IT)
(72) Inventor: Clodoveo, Maria Lisa, 70126 Bari (BA) (IT)
(74) Representative: Romano, Giuseppe

(56) References cited:
- EP-A2- 1 260 571
- WO-A1-2006/093474
- WO-A1-2007/048789
- US-A- 4 522 119
- US-A1- 2006 165 861

## Description

The present invention lies in the field of the treating and transforming of olives. In particular, it refers to a method and an apparatus comprising a section for thermal conditioning of olives or other oleaginous fruits, a section for crushing in controlled or modified atmosphere and a section for kneading in controlled or modified atmosphere, to be used in processes for extracting virgin oil from olives or other oleaginous fruits.

As is well known, currently the systems for mechanically extracting virgin oils from olives are basically of two types: discontinuous-type systems and continuous-type systems.

Discontinuous-type systems, generally comprised of a millstone combined with hydraulic presses, generally have a low working capacity and unavoidably require a high amount of labour. For these reasons they are deemed obsolete and are dying out, superseded by continuous-type systems.

Systems defined as "continuous-type" are generally comprised of a mechanical crusher, a kneader and a horizontal-axis centrifugal separator (decanter).

The "continuous" appellation refers to the fact that two (mechanical crusher and decanter) out of the three machines making up the system operate continuously; the kneader, which actually is a machine working in batches, is located between these two continuous apparatuses.

Traditionally, the kneading step consists in a slow stirring (12-18 rpm) of the olive paste at 27-32°C, for a time comprised between 30 and 60 minutes, depending on the characteristic of the raw material. The object of the kneading is on the one hand to foster coalescence of oil droplets into drops of greater size, more easily separable in a centrifugal field, and on the other hand to reduce the viscosity value of the olive paste so as to optimize phase separation inside the decanter (oil/ vegetation water/ olive residue).

The kneading step actually represents the bottleneck of the continuous extraction process. At present, the system employed to assure continuity to the process without having to interrupt the activity of the machines upstream and downstream of the kneader consists in arranging plural kneading machines in parallel, with the burden of a heavy investment in plant engineering. Oil mills not equipped with plural kneaders arranged in parallel actually operate discontinuously and do not fully exploit the working capacity of the oil press and of the decanter.

One of the crucial factors causing such lengthy kneading times is the time period needed for the freshly crushed olive paste to reach the process temperature (27-32°C). This period has a length on average equal to at least one-third of the total kneading time, as the olive paste outlet from the crusher may have temperatures comprised between 18 and 26°C, depending on the temperature of the working environment and the type of crusher employed.

The apparatus subject-matter of the present invention is comprised of three distinct sections:
- a section for pretreatment of olives in a liquid medium, preferably water, which can be heated (from 30 to 90° C, preferably to 60-72 °C);
- a crusher, which is able to operate also in controlled or modified atmosphere;
- a kneader, which is able to operate also in controlled or modified atmosphere. The method and the apparatus described envisage in the first section the passage of olives through a vat containing heated water, preferably heated to the temperature of 60-72 °C, and for a short interval, preferably comprised between 2 and 5 minutes. The water held in the vat carries out a three-fold function: it
- allows to isolate olives from air before they get into the section where atmosphere is controlled or modified;
- acts as hydraulic cap, useful to confine the atmosphere inside of the crusher and the kneader;
- thermally conditions the olives, by preheating the raw matter so as to shrink the time period needed for the olive paste to reach process temperature in the kneading step.

It is known that, in kneading, time and temperature are inversely correlated parameters. Data present in the literature demonstrate that, kneading times being equal, an increase in the process temperature causes an increase in the percentage of oil extracted from the paste. Therefore, with an increase in temperature the kneading times shrink. Moreover, the increase in kneading temperature positively influences also the values of density and viscosity of the liquid phases, causing an improved separation of the same from the solid phase inside the centrifugal decanter.

Generally, in plants currently in use for extraction of virgin oil from olives, kneading temperatures comprised between 28 and 32°C are employed. Such temperatures should not be exceeded, in order not to accelerate the oxidative processes against the lipid matrix, fostered by presence of oxygen in the olive paste. In fact, said oxygen penetrates the olive paste right from the crushing step, as the brisk rotation of the drupe crushing members causes incorporation of air in the product. Oxygen can still be incorporated during paste stirring in the kneading step, above all when the rotary reel of the kneader is not totally covered by the paste.

The mechanism of chemical oxidation of unsaturated fats is amply influenced by oxygen availability. In the non-enzymatic lipid oxidation process, atmospheric oxygen leads to formation of hydroperoxides (primary oxidation products) starting from unsaturated fatty acids, by means of a radical action mechanism.

In the first stage of initiation there is the formation of very unstable free radicals, starting from a fatty acid which has lost a hydrogen atom from an allyl methylene (carbon adjacent to a carbon engaged in a double bond).

RH→R°+H°

Then the radical, by quickly reacting with oxygen, leads to the formation of a peroxide radical:

R° + O₂ → ROO°

This highly reactive compound continues to react with the unsaturated fatty acids, leading to the formation of hydroperoxides (primary oxidation products) and other radicals, which restart the cycle:

ROO° + RH → ROOH + R°

From this point a chain reaction starts, since in the presence of oxygen the radical obtained forms again a peroxide radical, repeating the process (propagation) and thereby causing hydroperoxide accumulation.

During extraction of oil from olives, oxidative processes can be reduced by eliminating the oxygen into contact with the olive oil paste in all steps of the extraction process. Under such controlled conditions it is possible to raise the kneading temperatures also of 20-30°C with respect to the method.

Given the known correlation between time and kneading temperature, this thermal increase can be translated into a reduction of the process time.

From oxygen elimination a further advantage can be attained: also oxidasic enzymes unfavourable to oil quality are inhibited.

Crushing frees enzymatic complexes which have a negative activity on some components of the olive paste; in particular, it frees enzymes, such as polyphenol oxidase and peroxidase; in the kneading step those, in the presence of oxygen, catalyse the degradation of phenolic substances, limiting their final concentration in oil. Elimination of oxygen from the matrix inhibits the activity of these enzymes.

As to the influence of the kneading temperature on the solubility of lipid-phase phenolic substances, it has been observed that oils obtained at higher temperatures have a higher phenolic content with respect to oils obtained at lower temperatures. This phenomenon is explained in the light of the fact that the solubility of phenolic compounds in lipid matrices depends on temperature. By extracting the virgin oils from olives in the absence of oxygen, polyphenolic substances are protected from oxidation, and their transfer from vegetable tissues to the lipid phase is fostered by increasing the process temperature.

Kneaders operating in an inert atmosphere, as described in US Pat. Appln. 2006/0165861, are currently available on the market. According to what is described in said Patent, only the head space of the kneader is inertized; in the apparatus subject-matter of the present invention, by inertizing the crusher also the oxygen dissolved in the olive paste during the crushing is eliminated; said oxygen, when present in a significant amount, promotes oxidative phenomena on unsaturated fatty acids and polyphenolic substances.

As to the thermal conditioning of olives before the crushing, data reported in the literature highlight that the dipping of olives in water at temperatures comprised between 60 and 72 °C for 3 minutes causes no significant changes in acidity values, indices of specific absorption in the ultraviolet range (K232, K270), peroxide index and organoleptic characteristics, whereas it causes increases in the content of chlorophylls and carotenoids of the extracted oil.

The preliminary thermal treatment of olives destined to transformation further contributes to the inactivation of heat-sensitive enzymes, catalysts of undesired reactions, and can contribute to reduce the initial microbial charge of olives and foster the elimination of air contained inside vegetable tissues.

Inertized milling is a technology already widely used in the chemical-pharmaceutical field, but in the food-making field it has never been applied yet to olive crushing.

Oxygen elimination, both in the crushing and in the kneading step, would allow in the kneading a use of temperatures higher than those applied in traditional systems (from 28-32°C to 60-72°C) as one of the elements capable of promoting lipid matrices oxidation is subtracted.

Object of the present invention is to remove oxygen from the olive paste not only during the kneading, but also and above all in the crushing step, to prevent atmospheric oxygen from being incorporated in the crushed paste. Thus, it is possible to raise the process temperature and reduce the process length, without exposing to an excessive oxidative risk the lipid matrix.

Hence, object of the present invention is to provide an innovative solution to the problems still left open by the known art, by providing a method for treatment and transformation of olives as defined in independent claim 1.

A further object of the present invention is to provide an apparatus for treatment and transformation of olives as defined in claim 6.

Secondary features of the present invention are instead defined in the corresponding dependent claims thereof.

As will be illustrated hereinafter in the description, the present invention entails several advantages.

First of all, the present invention allows to reduce the kneading times, improving the working capacity of the line and thereby allowing to reduce the number of kneaders to be arranged in parallel, with an entailed reduction of the initial investments, concomitantly preserving the quality of the product.

The modularity of industrial plants for mechanical extraction of virgin oils from olives allows the introduction of this device also on pre-existing transformation lines with a limited investment. Moreover, the reduction of the kneading times allows to optimize the working capacity of the entire transformation line.

The apparatus described is able to work also in the traditional conditions of temperature and atmosphere, guaranteeing a flexibility of use depending on the process and on the desired product.

The use of an inert gas (e.g., nitrogen) during the crushing allows to preserve the chemico-physical properties of the product. Within the scope of the present invention, an inert gas is in fact applied in the step preceding the kneading. Presence of oxygen from other sources can be ruled out, since as long as olives are whole, oxygen contained inside vegetable tissues is used up by the respiratory activity persisting even after detachment of drupes from the tree. Moreover, the thermal treatment preceding the crushing fosters the elimination of residual air possibly still occluded in vegetable tissues before olives are crushed.

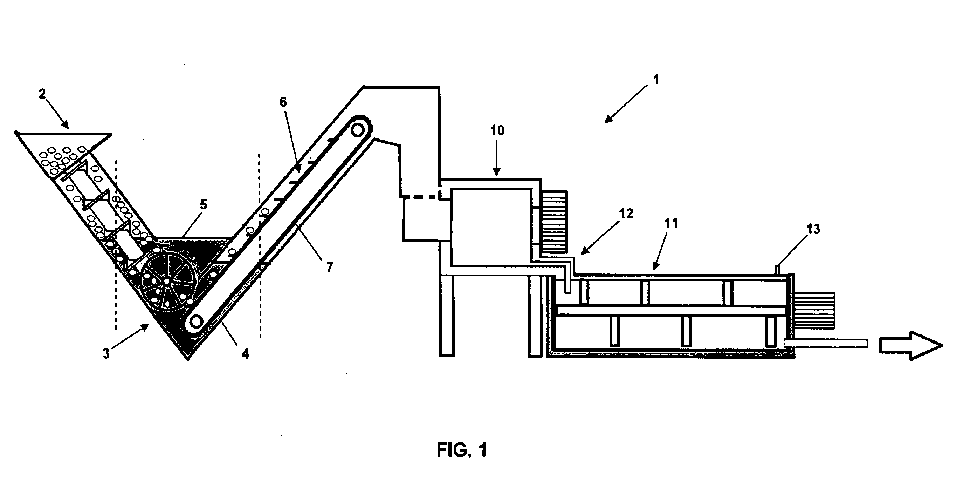

These and further advantages, as well as the features and operation modes of the present invention, will be made apparent from the following detailed description of an embodiment thereof, given by way of example and not for limitative purposes. Reference will be made to the figures of the annexed drawings, wherein Figure 1 is an exemplary scheme of the apparatus according to the present invention.

The present invention will hereinafter be described in detail, making reference to the above-indicated figure.

Figure 1 shows an apparatus for treatment of olives according to the present invention. The apparatus of Figure 1 is therefore suitable for implementing the method of treatment subject-matter of the present invention.

In particular, an apparatus 1 according to the present invention comprises a section 2 for inletting olives to be treated.

Olives inlet in the apparatus are then carried to the bottom of the vat 4 inside which they will undergo thermal treatment. A device 3 keeps the olives on the bottom and sends them to the conveyor belt 7 feeding the crusher, preventing them from floating to the surface, dispersing in the entire volume of the vat.

The rates of the device for inletting olives in the vat and of the conveyor belt regulate the length of the thermal treatment.

According to the preferred embodiment of the present invention, the thermal treatment section 3 comprises heating means suitable for carrying out a controlled heating of olives at a temperature comprised between 30°C and 90°C.

Even more preferably, the heating of olives is carried out at a temperature comprised between 60°C and 72°C.

In particular, the heating means comprises an olive collecting vat 4 apt to contain a liquid 5, preferably water, kept at a controlled temperature, as specified in the foregoing.

Therefore, in accordance with the method according to the present invention, the olives coming from the sorting and the washing are transferred into a vat 4, preferably having a conical bottom, which contains water at the temperature of 60-72°C, in order to be subjected to a brief thermal treatment (preferably 2-5 minutes).

According to the embodiment described herein, in the vat 4 a conveyor belt 7 is immersed, confined inside a first transfer duct 6 for transferring thermally treated olives to a crusher 10.

According to the present invention, the first transfer duct 6 is isolated from the outside environment, e.g. made in the form of a tubular duct.

According to the present invention, the crusher 10 is apt to operate in controlled or modified atmosphere. Therefore, the process according to the present invention envisages that the conveyor belt 7 conveys olives from the conical-bottom vat 4 to the chamber isolating the crusher 10 from the environment, in order to feed the crushing device and carry out a step of crushing, in controlled or modified atmosphere, thermally treated olives to obtain an olive paste.

The crushed product, i.e. the olive paste, is then transferred directly to a hermetic kneader 11, apt to operate in controlled atmosphere, to knead the olive paste.

Olive paste transfer preferably occurs via a second transfer duct 12 for transferring olive paste to the kneader 11. Of course, also such a second transfer duct 12 is isolated from the outside environment.

Advantageously, the kneader 11 comprises a one-way valve 13 which allows the outletting of air or gas during the loading step, but not allowing their inletting into the kneading environment.

According to the preferred embodiment of the method of treatment described herein, the atmosphere confined inside the apparatus, both of the crusher and of the kneader, can be controlled or modified by inletting an inert gas (e.g., nitrogen, argon, carbon dioxide, helium), or a mixture thereof with other gases, thereinto, thereby carrying out a step of inertizing the crushing environment and/or the kneading environment.

For this purpose, it may therefore be envisaged that the apparatus 1 comprise means for inertizing the crusher and/or the kneader, in order just to obtain a processing in controlled or modified atmosphere.

Such inertizing means will therefore comprise means for inletting an inert gas into the crushing and/or kneading environment, where, as mentioned hereto, the gas may be selected, e.g., from: argon, carbon dioxide, helium or a mixture of the same with other gases.

The configuration of the apparatus is such that the atmosphere upstream of the crusher, therefore in the transfer duct 6, is balanced by the hydrostatic pressure of the water vat 4, whereas downstream of the crusher it is delimited by the hermetic kneader which allows only the outletting of gas, via the valve 13, but not its inletting.

This can be further obtained also thanks to the applying of an overpressure of the inert gas, with respect to the atmospheric pressure in the crushing and/or kneading environment.

Advantageously, the inertizing means can be such as to inlet the gas in the region of the crusher. Thus, it is the crusher which is directly inertized, but, since the kneader 11 is in hydraulic communication therewith, the latter is therefore inertized.

Thus, olive paste is produced in the crusher, preventing entrainment of environment air by olive paste feeding to the kneader. Therefore, the olive paste, shielded from contact with atmospheric oxygen, can be kneaded at temperatures higher than those traditionally employed without the onset of oxidative reactions, and obtaining the relevant advantages in terms of amount of extracted oil and reduction of kneading times.

The present invention has been hereto described with reference to a preferred embodiment thereof. It is understood that other embodiments might exist, all falling within the concept of the same invention, and all comprised within the protective scope of the claims hereinafter.

## Claims

1. A method for treatment of olives, comprising the following steps:
- carrying out a thermal treatment of olives;
- carrying out a step of crushing, in controlled or modified atmosphere, said thermally treated olives, to obtain an olive paste; and
- carrying out a step of kneading, in controlled or modified atmosphere, said olive paste, to homogenize said olive paste,
wherein the atmosphere of the crushing and/or kneading is controlled or modified by inletting an inert gas or a gas mixture in the crushing and/or kneading environment.

2. The method according to claim 1, wherein said thermal treatment comprises a heating of olives at a temperature comprised between 30°C and 90°C.

3. The method according to claim 2, wherein said heating is carried out at a temperature comprised between 60°C and 72°C.

4. The method according to one of the preceding claims, wherein said thermal treatment is carried out by passing the olives in a liquid kept at a controlled temperature.

5. The method according to anyone of the preceding claims, wherein said gas is an inert gas selected from: nitrogen, argon, carbon dioxide, helium or a mixture thereof, brought to a pressure higher than the atmospheric pressure in the crushing and/or kneading environment.

6. An apparatus (1) for treatment of olives, comprising
- a section (3) for thermal treatment of olives;
- a crusher (10) apt to operate in controlled or modified atmosphere, to obtain olive paste; and
- a kneader (11) apt to operate in controlled atmosphere, to knead said olive paste,
wherein the atmosphere of the crushing and/or kneading is controlled or modified by inletting an inert gas or a gas mixture in the crushing and/or kneading environment.

7. The apparatus (1) according to claim 6, further comprising a first transfer duct (6) for transferring thermally treated olives to said crusher (10), said first transfer duct (6) being isolated from the outside environment.

8. The apparatus (1) according to claim 6 or 7, further comprising a second transfer duct (12) for transferring olive paste produced by the crusher (10) to said kneader (11), said second transfer duct (12) being isolated from the outside environment.

9. The apparatus (1) according to one of the claims 6 to 8, wherein said thermal treatment section (3) comprises heating means (4, 5) apt to carry out a controlled heating of olives at a temperature comprised between 30°C and 90°C.

10. The apparatus (1) according to claim 9, wherein said heating is carried out at a temperature comprised between 60°C and 72°C

11. The apparatus (1) according to claim 9 or 10, wherein said heating means (4, 5) comprises a vat (4) for collecting olives, apt to contain a liquid (5) kept at a controlled temperature.

12. The apparatus (1) according to one of the claims 6 to 11, comprising means for inertizing said crusher and/or said kneader (11), to obtain a processing in controlled or modified atmosphere.

13. The apparatus (1) according to claim 12, wherein said inertizing means comprises means for inletting an inert gas into the crushing and/or kneading environment, said gas being selected from: nitrogen, argon, carbon dioxide, helium, said inertizing means being apt to bring said inert gas to a pressure higher than atmospheric pressure in the crushing and/or kneading environment.

## Patentansprüche

1. Verfahren für die Behandlung von Oliven, welches die folgenden Schritte umfasst:
- Durchführung einer thermischen Behandlung der Oliven;
- Durchführung eines Schritts des Zerstampfens oder Zerkleinerns der thermisch behandelten Oliven in einer kontrollierten oder modifizierten Atmosphäre, um eine Olivenpaste zu erhalten; und
- Durchführung eines Schritts des Knetens der Oliven paste in einer kontrollierten oder modifizierten Atmosphäre, um die Oliven paste zu homogenisieren,
wobei die Atmosphäre der Zerstampfung bzw. Zerkleinerung und/oder des Knetens durch Ansaugung eines Inertgases oder eines Gasgemisches in die Zerstampfungs- bzw. Zerkleinerungs- und/oder Knetumgebung kontrolliert oder modifiziert wird.

2. Verfahren nach Anspruch 1, wobei die thermische Behandlung die Erwärmung der Oliven bei einer Temperatur zwischen 30°C und 90°C aufweist.

3. Verfahren nach Anspruch 2, wobei die Erwärmung bei einer Temperatur zwischen 60°C und 72°C ausgeführt wird.

4. Verfahren nach einem der vorhergehenden Ansprüche, wobei die thermische Behandlung durchgeführt wird, indem die Oliven in einer Flüssigkeit geführt werden, welche auf einer kontrollierten Temperatur gehalten wird.

5. Verfahren nach einem der vorhergehenden Ansprüche, wobei es sich bei dem Gas um ein Inertgas handelt, welches aus der folgenden Gruppe ausgewählt wird: Stickstoff, Argon, Kohlendioxid, Helium oder ein Gemisch daraus, welche auf einen Druck größer als der atmosphärische Druck in der Zerstampfungs- bzw. Zerkleinerungs- und/oder Knetumgebung gebracht werden.

6. Vorrichtung (1) zur Behandlung von Oliven, welche Folgendes aufweist:
einen Abschnitt (3) zur thermischen Behandlung der Oliven;
eine Zerkleinerungsmaschine (10), welcher für den Betrieb in kontrollierter Atmosphäre geeignet ist, um eine Olivenpaste zu erhalten; und
eine Knetmaschine (11), welche für den Betrieb in kontrollierter Atmosphäre geeignet ist, um die Oliven paste zu kneten;
wobei die Atmospähre der Zerkleinerung und/oder des Knetens durch Ansaugung eines Inertgases oder eine Gasgemisches in der Zerkleinerungs- und/oder Knetumgebung kontrolliert oder modifiziert wird.

7. Vorrichtung (1) nach Anspruch 6, welche des Weiteren einen ersten Überführungskanal (6) zur Überführung der thermisch behandelten Oliven in die Zerkleinerungsmaschine (10) aufweist, wobei der erste Überführungskanal (6) von der Außenumgebung isoliert ist.

8. Vorrichtung (1) nach Anspruch 6 oder 7, welche des Weiteren einen zweiten Überführungskanal (12) zur Überführung der von der Zerkleinerungsmaschine (10) erzeugten Olivenpaste in die Knetmaschine (11) aufweist, wobei der zweite Überführungskanal (12) von der Außenumgebung isoliert ist.

9. Vorrichtung (1) nach einem der Ansprüche 6 bis 8, wobei der thermische Behandlungsabschnitt (3) Heizeinrichtungen (4, 5) aufweist, welche zur Ausführung einer kontrollierten Erwärmung der Oliven bei einer Temperatur zwischen 30°C und 90°C geeignet ist.

10. Vorrichtung (1) nach Anspruch 9, wobei die Erwärmung bei einer Temperatur zwischen 60°C und 72°C erfolgt.

11. Vorrichtung (1) nach Anspruch 9 oder 10, wobei die Heizeinrichtungen (4, 5) eine Wanne (4) für die Aufnahme der Oliven aufweist, welche zum Fassen einer Flüssigkeit (5) geeignet ist, welche auf einer kontrollierten Temperatur gehalten wird.

12. Vorrichtung (1) nach einem der Ansprüche 6 bis 11, welche Einrichtungen zur Inertisierung der Zerkleinerungs- und/oder Knetmaschine (11), um eine Verarbeitung in kontrollierter oder modifizierter Atmospähre zu erreichen.

13. Vorrichtung (1) nach Anspruch 12, wobei die Inertisierungsvorrichtung Einrichtungen zur Ansaugung eines Inertgases in die Zerkleinerungs- und/oder Knetumgebung aufweist, wobei das Gas aus der folgenden Gruppe ausgewählt wird: Stickstoff, Argon, Kohlendioxid, Helium, wobei die Inertisierungsvorrichtung geeignet ist, um das Gas auf einen Druck zu bringen, der höher ist als der atmosphärische Druck in der Zerkleinerungs- und/oder Knetumgebung.

## Revendications

1. Procédé pour le traitement des olives, comprenant les étapes suivantes consistant à :
réaliser un traitement thermique des olives ;
réaliser une étape consistant à broyer, dans une atmosphère contrôlée ou modifiée, lesdites olives traitées thermiquement, pour obtenir une pâte d'olive ; et
réaliser une étape consistant à malaxer, dans une atmosphère contrôlée ou modifiée, ladite pâte d'olive, pour homogénéiser ladite pâte d'olive,
dans lequel l'atmosphère du broyage et/ou du malaxage est contrôlée ou modifiée en laissant entrer un gaz inerte ou un mélange de gaz dans l'environnement de broyage et/ou de malaxage.

2. Procédé selon la revendication 1, dans lequel ledit traitement thermique comprend une étape consistant à chauffer les olives à une température comprise entre 30 °C et 90 °C.

3. Procédé selon la revendication 2, dans lequel ladite étape de chauffage est réalisée à une température comprise entre 60 °C et 72 °C.

4. Procédé selon l'une des revendications précédentes, dans lequel ledit traitement thermique est réalisé en faisant passer les olives dans un liquide maintenu à une température contrôlée.

5. Procédé selon l'une quelconque des revendications précédentes, dans lequel ledit gaz est un gaz inerte choisi parmi : l'azote, l'argon, le dioxyde de carbone, l'hélium ou leur mélange, amené à une pression supérieure à la pression atmosphérique dans l'environnement de broyage et/ou de malaxage.

6. Appareil (1) pour le traitement des olives, comprenant :
une section (3) pour le traitement thermique des olives ;
un broyeur (10) approprié pour fonctionner dans une atmosphère contrôlée ou modifiée, pour obtenir la pâte d'olive ; et
un malaxeur (11) approprié pour fonctionner dans une atmosphère contrôlée, pour malaxer ladite pâte d'olive,
dans lequel l'atmosphère du broyage et/ou du malaxage est contrôlée ou modifiée en laissant entrer un gaz inerte ou un mélange de gaz dans l'environnement de broyage et/ou de malaxage.

7. Appareil (1) selon la revendication 6, comprenant en outre un premier conduit de transfert (6) pour transférer des olives traitées thermiquement audit broyeur (10), ledit premier conduit de transfert (6) étant isolé de l'environnement extérieur.

8. Appareil (1) selon la revendication 6 ou 7, comprenant en outre un second conduit de transfert (12) pour transférer la pâte d'olive produite par le broyeur (10) audit malaxeur (11), ledit second conduit de transfert (12) étant isolé de l'environnement extérieur.

9. Appareil (1) selon l'une des revendications 6 à 8, dans lequel ladite section de traitement thermique (3) comprend des moyens de chauffage (4, 5) appropriés pour réaliser un chauffage contrôlé des olives à une température comprise entre 30 °C et 90 °C.

10. Appareil (1) selon la revendication 9, dans lequel ledit chauffage est réalisé à une température comprise entre 60 °C et 72 °C.

11. Appareil (1) selon la revendication 9 ou 10, dans lequel lesdits moyens de chauffage (4, 5) comprennent une cuve (4) pour collecter les olives, appropriée pour contenir un liquide (5) maintenu à une température contrôlée.

12. Appareil (1) selon l'une des revendications 6 à 11, comprenant des moyens pour rendre inerte ledit broyeur et/ou ledit malaxeur (11), pour obtenir un traitement en atmosphère contrôlée ou modifiée.

13. Appareil (1) selon la revendication 12, dans lequel lesdits moyens d'inertage comprennent des moyens pour laisser entrer un gaz inerte dans l'environnement de broyage et/ou de malaxage, ledit gaz étant choisi parmi : l'azote, l'argon, le dioxyde de carbone, l'hélium, lesdits moyens d'inertage étant appropriés pour amener ledit gaz inerte à une pression supérieure à la pression atmosphérique dans l'environnement de broyage et/ou de malaxage.
